# EUROPEAN PATENT APPLICATION

(11) **EP 2 045 812 A1**
(43) Date of publication of application: **08.04.2009**
(21) Application number: 08163267.1
(22) Date of filing: 29.08.2008
(51) Int. Cl.: G11B 27/34, G11B 27/10

(54) **Method and apparatus for generating a graphical user interface**

(30) Priority: 02.10.2007 KR 20070099249
(71) Applicant: Samsung Electronics Co., Ltd., Suwon-si, Gyeonggi-Do (KR)
(72) Inventor: Choi, Hyun-seok, Seoul (KR)
(74) Representative: Walaski, Jan Filip

(57) **Abstract**

A method and apparatus for displaying a graphical user interface (GUI) includes: a file searching unit searching for one or more other files related to a file to be reproduced; a file information extraction unit extracting file information from the file to be reproduced and the one or more other files detected by the file searching unit; and a user interface generation unit generating a user interface for reproducing a plurality of files, wherein the generating of the user interface is based on the file information extracted by the file information extraction unit.

## Description

The present invention relates to reproduction of a multimedia file, and more particularly, to a graphical user interface (GUI) of a multimedia reproduction apparatus that enables a plurality of correlated files to be reproduced or managed virtually as if they are one file.

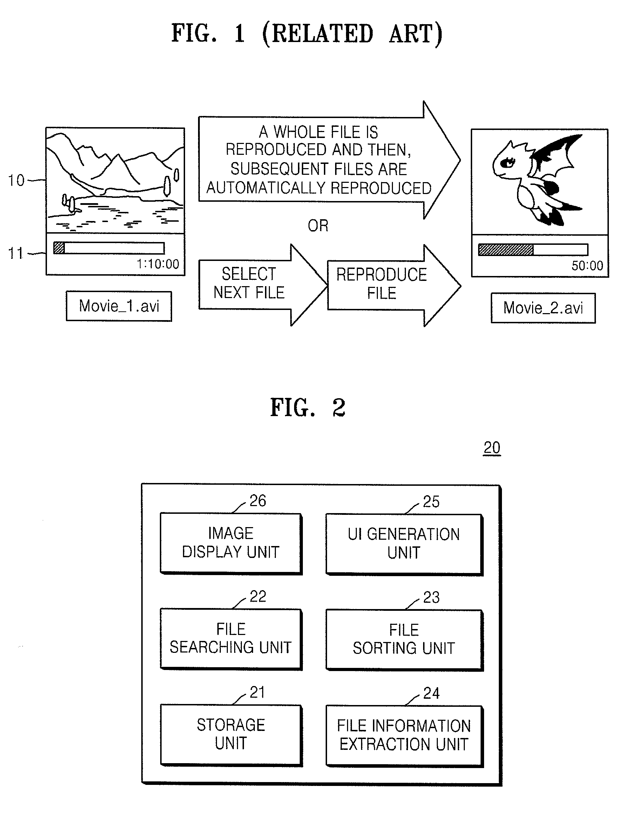

FIG. 1 is a diagram illustrating an example of displayed images of an image reproduction apparatus according to a related art technology. On an image display unit of the image reproduction apparatus, an image 10 that is being reproduced and a user interface 11 at a location below the image 10 are displayed. The user interface 11 helps a user to reproduce or manage an image file of the image 10 by using the image reproduction apparatus.

However, according to the related art technology, the user has to use any one of the following two methods in order to view a plurality of files continuously in sequence.

The first method is one in which a reproduction apparatus continuously or sequentially reproduces correlated files (for example, a first half and a second half of one movie). That is, after one file (for example the first half of the movie, Movie_1.avi) is reproduced, the reproduction apparatus finds another file with a similar file name (for example the second half of the movie, Movie_2.avi), and continuously or sequentially reproduces the files.

The other method is one in which a user personally searches for correlated files and reproduces the files manually. That is, after reproduction of the first file (or the first half of the movie) is finished, the user finds and selects the second file (or the second half of the movie) in a file directory and executes a file reproduction function for that selected file.

However, according to the related art technology as described above, when a user wants to reproduce a plurality of correlated files, the user has to find and reproduce each of the desired files whenever reproduction of each correlated file is finished, and this way of reproducing the correlated files causes inconvenience for the user.

Aspects of the present invention provides a method and apparatus for displaying a graphical user interface (GUI), by which a user can reproduce or manage a plurality of correlated files as if they are one file.

According to an aspect of the present invention, there is provided an apparatus for displaying a GUI (graphical user interface), the apparatus including: a file searching unit to search for one or more other files related to a file to be reproduced; a file information extraction unit to extract file information from the file to be reproduced and the one or more other files detected by the file searching unit; and a user interface generation unit to generate a user interface for reproducing the file to be reproduced and the detected one or more other files, wherein the generation of the user interface is based on the file information extracted by the file information extraction unit, and the file to be reproduced and the detected one or more other files are arranged in a correct reproduction order.

According to another aspect of the present invention, there is provided a method of displaying a GUI, the method including: searching for one or more other files related to a file to be reproduced; extracting file information from the file to be reproduced and the detected one or more other files from the searched one or more other files; generating a user interface for reproducing the file to be reproduced and the detected one or more other files, wherein the generating of the user interface is based on the extracted file information; and displaying the generated user interface on an image display unit includes the file to be reproduced and the detected one or more other files in a correct reproduction order.

According to another aspect of the present invention, there is provided a computer readable recording medium having embodied thereon a computer program for executing a method of displaying a GUI, wherein the method includes: searching for one or more other files related to a file to be reproduced; extracting file information from the file to be reproduced and the detected one or more other files from the searched one or more other files; generating a user interface for reproducing the file to be reproduced and the detected one or more other files, wherein the generating of the user interface is based on the extracted file information; and displaying the generated user interface includes the file to be reproduced and the detected one or more other files in a correct reproduction order.

According to the method of and apparatus for displaying a GUI according to aspects of the present invention, a plurality of related files can be reproduced or managed as if they are one file, thereby allowing a user to view a plurality of multimedia files conveniently and quickly.

Also, the method of and apparatus for displaying a GUI according to the present invention provides a useful bookmarking function when a plurality of files are reproduced.

According to another aspect of the present invention, a file reproducing apparatus displaying a GUI (graphical user interface) includes an image display unit to provide a graphic display of a user interface used to manage a plurality of files as if they are one file; a storage unit to store the plurality of files; and a controller to determine whether one or more of the plurality of files are correlated to a predetermined file of the plurality of files, to reproduce the predetermined file and the one or more files that are correlated to the predetermined file in a correct sequence on the image display unit, and to generate the user interface to display information of the predetermined file and the correlated one or more files as if they are one file.

According to another aspect of the present invention, a method of displaying a GUI (graphical user interface) in reproducing related files, includes determining whether one or more of a plurality of files are related to a predetermined file of the plurality of files, reproducing the predetermined file and the one or more files that are related to the predetermined file in a correct sequence; and generating a user interface to display information of the predetermined file and the related one or more files as if they are one file, so that the predetermined file and the related one or more files are managed as if they are one file.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the aspects, taken in conjunction with the accompanying drawings of which:
FIG. 1 is a diagram illustrating an example of displayed images of an image reproduction apparatus according to a related art technology;
FIG. 2 is a functional block diagram illustrating a structure of an apparatus for displaying a graphical user interface (GUI) according to an aspect of the present invention;
FIG. 3 is a flowchart illustrating a method of displaying a GUI according to an aspect of the present invention;
FIG. 4 is a diagram illustrating examples of determination criteria for finding other files related to a file to be reproduced in a method of displaying a GUI according to an aspect of the present invention;
FIGS. 5A and 5B are diagrams illustrating examples of user interfaces for reproducing a plurality of files according to an aspect of the present invention; and
FIGS. 6A, 6B, and 6C are diagrams illustrating examples of user interfaces for reproducing a plurality of files displayed on an image display unit according to aspects of the present invention.

Reference will now be made in detail to aspects of the present invention, examples of which are illustrated in the accompanying drawings, wherein like reference numerals refer to the like elements throughout. The aspects are described below in order to explain the present invention by referring to the figures.

FIG. 2 is a functional block diagram illustrating a structure of an apparatus 20 for displaying a graphical user interface (GUI) according to an aspect of the present invention. The apparatus 20 for displaying the GUI includes a storage unit 21, a file searching unit 22, a file information extraction unit 24, a file sorting unit 23, a user interface generation unit 25, and an image display unit 26.

The storage unit 21 stores a variety of multimedia files (for example, video files, audio files, etc.), and stores a user interface list, bookmarking information, etc., that may be related to the multimedia files. The user interface list and the bookmarking information will be discussed later.

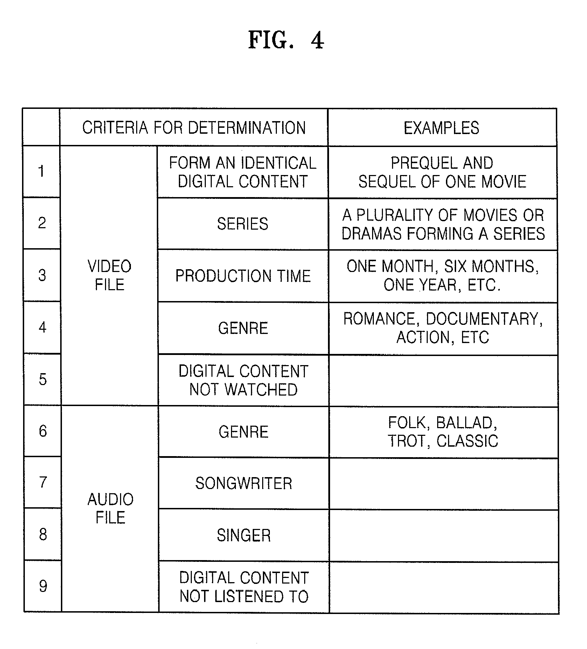

The file searching unit 22 searches among the variety of multimedia files stored in the storage unit 21 for one or more other multimedia files that are correlated to a file to be currently reproduced (or is to be immediately reproduced, or is being reproduced or selected), by referring to preset determination (or search) criteria. The determination criteria include a variety of categories as illustrated in FIG. 4. This will be explained later in more detail. The determination criteria can be preset by a manufacturer or by a user of the apparatus 20, such as a multimedia file reproducing apparatus.

The file sorting unit 23 sorts the file to be currently reproduced and the one or more other multimedia files searched by the file searching unit 22 according to a preset sorting order. This preset sorting order will be explained later in more detail. The file information extraction unit 24 extracts file information (for example, a reproduction time of each file, and a reproduction order of files) from the file to be currently reproduced and the one or more other multimedia files searched and detected by the file searching unit 22.

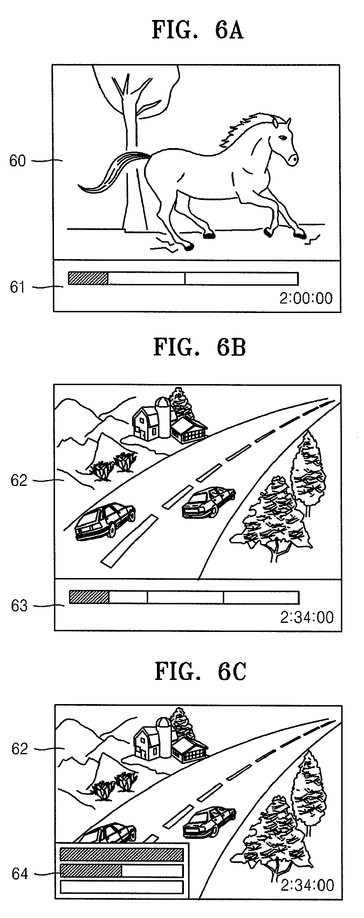

The user interface generation unit 25 generates a user interface used to reproduce a plurality of multimedia files based on the file information extracted by the file information extraction unit 23. The user interface is provided to the user visually through the image display unit 26. Examples of the user interface that are displayed on the image display unit 26 are illustrated in FIG. 6.

The apparatus for displaying a GUI according to an aspect of the present invention may be implemented as a part of a portable multimedia reproduction apparatus (for example, a PMP, an MP3P, an MP4P, etc.), a personal digital recording apparatus (for example, a PVR, a DTV, etc.), and an interactive television (for example, an IPTV, a VOD, etc.), or even a computer or a small or portable digital video machine.

In aspects of the present invention, the file searching unit 22, the file sorting unit 23, the file information extraction unit 24, and the user interface generation unit 25 may be implemented as a single controller, or one or more of them may be implemented as a unit.

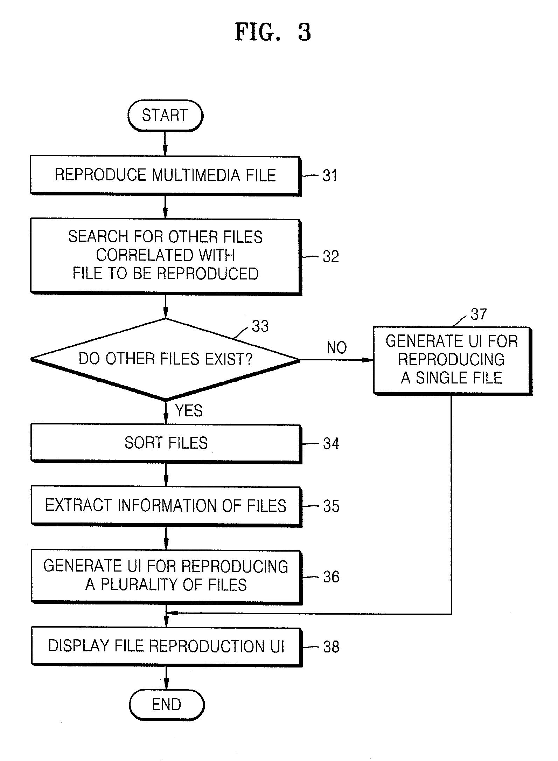

FIG. 3 is a flowchart illustrating a method of displaying a GUI according to an aspect of the present invention. First, a user turns on a file reproduction apparatus or executes a reproduction program in the apparatus in order to reproduce a file. Then, the file to be reproduced is selected, and a reproduction start command is input in operation 31 to reproduce the file. In an aspect of the present invention, the file is a multimedia file.

In operation 32, one or more other files correlated with the file to be reproduced are searched for. By referring to preset determination (or search) criteria, the file searching unit 22 searches among multimedia files stored in the storage unit 21 of the reproduction apparatus for one or more other files correlated with the file to be reproduced. That is, the file searching unit 22 searches for the files which are to be displayed or are displayable in conjunction with the file to be currently reproduced or is being reproduced, on one user interface. In an aspect of the present invention, the one or more other files are multimedia files.

The determination (or search) criteria for determining the correlation of the files may include those illustrated in FIG. 4. For example, if a determination criterion corresponds to item 1, the file searching unit 22 searches for other files that form an identical digital content. That is, if a movie file being currently reproduced is a first half movie file of one movie, the file searching unit 22 searches for the second half movie file of the movie. On the other hand, if the determination criterion corresponds to item 4, the file searching unit 22 searches for other files belonging to the same genre as that of the file to be reproduced or being currently reproduced. That is, one or more video files of the same genre are searched for and played.

In a similar manner, if a file to be currently reproduced or being reproduced is an audio file, the file searching unit 22 may search for other music files (item 6) belonging to the same genre as that of the audio file, or other music files (item 8) sung by the same singer as that of the audio file, if those determination criteria are selected or used.

As shown in FIG. 4, the determination criteria include those for video or audio, for example. For video, the determination criteria may be of, a content that form an identical digital content, a series, a production time, genre, or those that have not been watched. For audio, the determination criteria may be of, a genre, a songwriter, a singer, or those that have not been listened to. It is understood that other types of files and other criteria are within the scope of the invention, including how similar are the file names.

In aspects of the present invention, a manufacturer or user of a multimedia reproduction apparatus may select one from among the determination criteria and may preset or preselect the criterion before reproducing the file in operation 31.

In another aspect, instead of using the determination criteria, the manufacturer or the user can use a predetermined file list as a criterion to search for the one or more other files. In various aspects, the predetermined file list may be provided by a file provider or may be generated by the user. Thus, a search for the one or more other files may be performed without setting a separate determination criterion. That is, in general, when a user downloads files from an Internet site or from other storage devices to the multimedia file reproduction apparatus, a list of the downloaded files may also be downloaded together with the files. In this case, when one file from among the files included in the list is reproduced, all other files included in the list can be regarded as files correlated with the file to be reproduced. In another aspect, the list of the download files may be generated by the user to reproduce the one or more files in a sequence desired by the user. In an aspect of the invention, a list to reproduce the one or more files in sequence may be generated using the multimedia reproduction apparatus directly or through another device.

Returning to FIG. 3, in operation 33, it is determined, based on the result of the search performed in operation 32, whether other files correlated with the file to be reproduced exist. If the result of the determination performed in operation 33 indicates that other files correlated with the file to be reproduced do exist, the other files are sorted in a predetermined order in operation 34. That is, an order in which the other files detected in operation 32 are to be reproduced is determined and a user interface list according to the order of reproduction is generated. The generated user interface list may include the file to be reproduced.

In an example of the reproduction order in the user interface list, priority may be given to a file having an earlier production time or to files in alphabetical order. For example, when a plurality of video files forms one series of programs, the video files may be arranged in order of manufacturing (or production) time. In another aspect, the video files may be arranged by episode date or number. In aspects of the present invention, if the file to be reproduced is a first file in a series, the file will be listed as a first file in the user interface list. On the other hand, if the file is a last file or a file in the middle of the series, then the file will be listed as the last file or a middle file in the user interface list.

In another aspect, the reproduction order of the files may follow the file order indicated in a list that is provided together with the file, by a file provider, as discussed above. Files included in one user interface list are displayed as one user interface when the files are reproduced as shown in FIG. 6.

Returning to FIG. 3, in operation 35, information of the file to be reproduced and that of the detected files is extracted. For example, the reproduction time or the reproduction order of each file may be extracted. In another aspect, the execution order of operations 34 and 35 may be reversed or be concurrent. In operation 36, a user interface for reproducing a plurality of files is generated by using the user interface list and the file information obtained in operations 34 and 35.

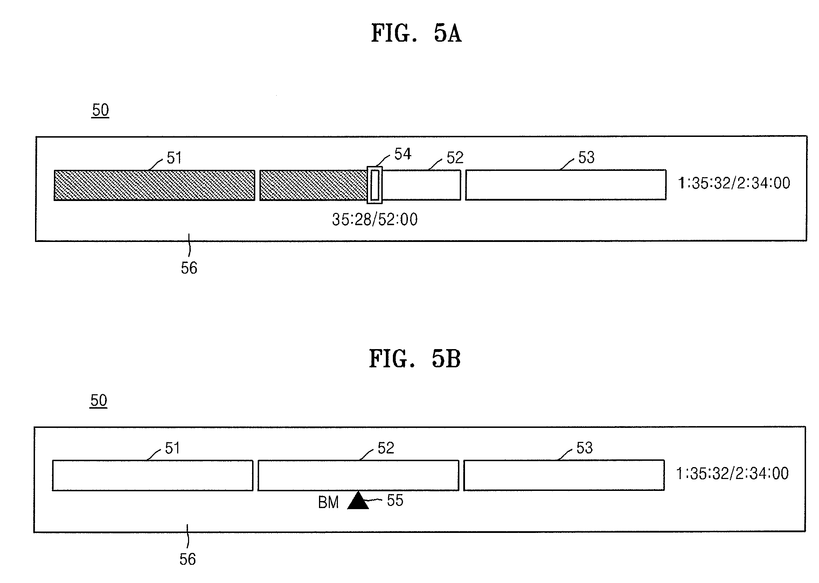

FIGS. 5A and 5B are diagrams illustrating examples of user interfaces for reproducing a plurality of files according to an aspect of the present invention. A user interface 50 for reproducing a plurality of files illustrated in FIG. 5A includes a play time scale 56. The play time scale 56 is formed of three play time bars 51, 52, and 53. Each play time bar 51, 52, and 53 corresponds to one file. The arrangement order of the play time bars 51, 52, and 53 is based on the reproduction order of the files. In aspects of the present invention, each play time bar may be expressed by a different color or shape in order to let the user know that each play time bar corresponds to a different file. In various aspects, each play time bar 51, 52, and 53 may include a file name, a picture, or indicia within itself to indicate correspondence to one of the files. In various aspects, each play time bar 51, 52, and 53 may be arranged from left to right, or vice versa, stacked from top to bottom, or vice versa, or other arrangements in the user interface 50. In an aspect of the present invention, the play time scale 56 may include a single play time bar for all three files, the single play time bar being a combined play time bar the three play time bar 51, 52, and 53, for example.

The user interface 50 for reproducing a plurality of files also includes a reproduction position pointer 54, which shows which file is being currently reproduced and a position of reproduction thereof. For the aspect shown in FIG. 5A, displayed below the pointer 54 are the reproduction time (52:00) of the file 52 being currently reproduced and the already reproduced time (35:28) of the file 52. Also, to the right of the last play time bar 53, the total reproduction time (2:34:00) of all files included in the play time scale 56 and the total reproduced time (1:35:32) up to the present time are displayed.

Referring back to FIG. 3, the user interface for reproducing a plurality of files generated as described above is displayed on the image display unit of the image reproduction apparatus in operation 38.

FIGS. 6A, 6B, and 6C are diagrams illustrating examples of user interfaces for reproducing a plurality of files displayed on an image display unit according to aspects of the present invention. FIG. 6A illustrates an example of a displayed user interface for two correlated files. FIGS. 6B and 6C illustrate examples, wherein each user interfaces 63, 64 has three correlated files displayed in one user interface. In the user interface 63 illustrated in FIG. 6B, three play time bars are arranged in series (or in sequence), while in the user interface 64 illustrated in FIG. 6C, three play time bars are arranged in parallel (or stacked). In FIGS. 6A, 6B, 6C, the displayed reproduced files 60 and 62 are depicted.

Referring back to FIG. 3, if the result of the determination performed in operation 33 indicates that no other files exist that correlate with the file to be reproduced, a user interface for reproducing the file to be reproduced alone (referred to as a single file) is generated in operation 37. Accordingly, the user interface for reproducing the single file generated in operation 37 is displayed on the image display unit of the image reproduction apparatus in operation 38.

Referring back to FIGS. 5A and 5B, a method of reproducing or managing files by using the user interface will now be explained. In FIG. 5A, if the user wants to reproduce the third file 53 while the second file 52 is being reproduced, the user only has to move the reproduction position pointer 54 that is on the play time bar 52 of the second file being reproduced, to the start point (or any point) of the third file 53, and reproduction of the third file 53 will begin.

In an aspect of the present invention, the user can use a bookmarking function to mark an important or desired viewing position. Also, the user can use the bookmarking function to mark the reproduction position at the time or location of stopping the reproduction of the file so that the file can be viewed later from the time or location where the reproduction was stopped. By using the GUI of the present invention, a bookmarking function can be easily executed for a plurality of files.

If the user selects the bookmarked file later in order to resume viewing the video files, the user interface 50 for reproducing a plurality of files as illustrated in FIG. 5B is generated and displayed on the image display unit. This user interface also shows a bookmark (BM) 55 illustrated in FIG. 5B previously marked by the user. By clicking this bookmark 55, the user can view the video file from the part (time or location) at which the user previously stopped viewing the file. Accordingly, by using the present invention, the user can save time and effort in comparison to a typical situation where all files have to be reproduced one by one in their entirety in order to find a part (time or location) at which the user stopped viewing the file. In an aspect of the present invention, a plurality of bookmarks may be used to mark a plurality of positions.

The method of displaying a GUI according to an aspect of the present invention can also be embodied as computer readable codes on a computer readable recording medium. That is, the method of displaying a GUI according to the present invention can be implemented in the form of multimedia reproduction software (for example, a multimedia reproduction program for a PC) and then, stored in a storage medium and distributed.

The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices. Aspects of the invention may also be embodied in computer-readable code embodied in the computer readable recording medium as a computer data signal in a carrier wave. The computer readable recording medium can also be distributed over network coupled computer systems so that the computer readable code is stored and executed in a distributed fashion.

In aspects of the present invention, once a file is selected, which may be one in a series of related or correlated files, other files in the series or other files that are related or correlated to the selected file may be found and linked to be reproduced in a proper or desired order, regardless of where in the series the selected file may be situated.

In various aspects, at least one of refers to alternatives chosen from available elements so as to include one or more of the elements. For example, if the elements available include elements X, Y, and Z, at least one of refers to X, Y, Z, or any combination thereof.

Although a few aspects of the present invention have been shown and described, it would be appreciated by those skilled in the art that changes may be made in the aspects without departing from the principles of the invention, the scope of which is defined in the claims.

## Claims

1. A method of generating a graphical user interface GUI, the method comprising:
searching for one or more files related to a file to be reproduced;
extracting file information from the file to be reproduced and the one or more related files;
generating a user interface for reproducing the file to be reproduced and the related files based on the extracted file information; and
displaying the generated user interface such that the file to be reproduced and the related files are arranged in a correct reproduction order.

2. The method of claim 1, further comprising reproducing the file to be reproduced and the related files.

3. The method of claim 2, wherein if the reproduction of the related files and the file to be reproduced is stopped by a user, the method further comprising bookmarking the position where the reproduction is stopped.

4. The method of claim 1, 2 or 3, wherein searching for one or more related files includes searching for the related files by referring to at least one preset determination criterion.

5. The method of claim 4, wherein the determination criterion includes at least one of a content that forms an identical digital content, a series, a production time, genre, content that has not been watched, a songwriter, a singer, or content that has not been listened to.

6. The method of any one of the preceding claims, further comprising sorting the file to be reproduced and the related files according to at least one preset sorting criterion.

7. The method of any one of the preceding claims, wherein if no related files exist, the method further comprises generating a user interface for reproducing only the file to be reproduced.

8. The method of any one of the preceding claims, wherein the user interface comprises a play time scale formed of a plurality of play time bars of the related files and the file to be reproduced.

9. The method of any one of the preceding claims, wherein the file information is reproduction time information of the files.

10. The method of any one of the preceding claims, wherein the file information is information on a reproduction order of the related files and the file to be reproduced.

11. A computer program which, when executed by a processor, is arranged to perform a method according to any one of the preceding claims.

12. A method of generating a graphical user interface GUI in reproducing related files, comprising:
determining whether one or more of a plurality of files are related to a predetermined file of the plurality of files,
reproducing the predetermined file and the one or more files that are related to the predetermined file in a correct sequence; and
generating a user interface to display information of the predetermined file and the related one or more files as if they are one file, so that the predetermined file and the related one or more files can be managed as if they are one file.

13. The method of claim 12, wherein the information includes at least one of a reproduction time of the file and a reproduction order of the file of the respective predetermined file and the correlated one or more files.

14. Apparatus for generating a graphical user interface GUI, the apparatus comprising:
means for searching for one or more files related to a file to be reproduced;
means for extracting file information from the file to be reproduced and the one or more related files;
means for generating a user interface for reproducing the file to be reproduced and the related files based on the extracted file information; and
means for displaying the generated user interface to permit reproduction of the file to be reproduced and the related files in a correct reproduction order.
